# EUROPÄISCHE PATENTSCHRIFT

(11) **EP 0 593 718 B1**
(45) Veröffentlichungstag und Bekanntmachung des Hinweises auf die Patenterteilung: **19.02.1997**
(21) Anmeldenummer: 93909548.5
(22) Anmeldetag: 05.05.1993
(51) Int. Cl.: F16C 1/22

(54) **VORRICHTUNG ZUR LÄNGENKORREKTUR VON MECHANISCH-FLEXIBLEN FERNBETÄTIGUNGEN**
LENGTH COMPENSATION DEVICE FOR MECHANICAL FLEXIBLE REMOTE CONTROLS
DISPOSITIF DE COMPENSATION DE LONGUEUR DE TELECOMMANDES MECANOFLEXIBLES

(30) Priorität: 07.05.1992 DE 4214533
(43) Veröffentlichungstag der Anmeldung: 27.04.1994
(73) Patentinhaber: KÜSTER & Co. GmbH, D-35630 Ehringshausen (DE)
(72) Erfinder: HILGERT, Günter, D-6330 Wetzlar 22 (DE); MEDEBACH, Thomas, D-6330 Wetzlar 17 (DE)
(74) Vertreter: Müller, Eckhard, Dr.
(86) Internationale Anmeldenummer: EP9301102
(87) Internationale Veröffentlichungsnummer: WO9322571

(56) Entgegenhaltungen:
- EP-A- 0 055 649
- EP-A- 0 196 931
- EP-A- 0 224 399
- EP-A- 0 342 143
- EP-A- 0 478 725
- EP-A- 0 508 625
- FR-A- 2 617 548
- GB-A- 2 016 634
- GB-A- 2 210 946

## Beschreibung

Die Erfindung betrifft eine Vorrichtung zur Längenkorrektur von Seilzügen, mechanisch flexiblen Fernbetätigungen und dgl. mit zwei relativ zueinander verstellbaren und in unterschiedlichen Positionen miteinander verrastbaren Bauteilen.

Betätigungszüge für Kupplungen an Kraftfahrzeugen werden häufig nicht vom Kraftfahrzeughersteller gefertigt, sondern kommen aus der Zulieferindustrie. Sie müssen so voreingestellt sein, daß bei der Montage im Werk des Kraftfahrzeugherstellers ein Minimum an Aufwand entsteht. Hierzu werden die Betätigungszüge, die ein Drahtseil und einen das Drahtseil umgebenden Schlauch aufweisen, mit einer Längenkorrekturvorrichtung ausgestattet, die üblicherweise die Schlauchlänge verändert. Die Anlieferung an den Kraftfahrzeughersteller erfolgt regelmäßig mit der kürzesten einstellbaren Schlauchlänge, damit die Seilenden leicht am Kupplungspedal und Ausrückhebel eingehängt werden können. Ist die Schlauchlänge von vornherein zu groß und kann das Seil des Betätigungszuges nur durch Vorbewegen des Ausrückhebels eingehängt werden, kann es vorkommen, die Kupplung anschließend nicht mehr greift. Das Vorbewegen des Ausrückhebels ist zudem eine Arbeit, die ohne Werkzeug praktisch nicht zu erledigen ist. Es ist deshalb eine Unter länge des Schlauches bei der Anlieferung des Betätigungszuges an den Kraftfahrzeughersteller gefordert. Diese Unterlänge wird durch Längenkorrekturvorrichtungen in einer Ersteinstellung bei der Montage ausgeglichen, so daß die Länge von Seil und Schlauch des Betätigungszuges im eingebauten Zustand genau stimmt.

Aus der EP-A-0 478 725 und der FR-A-2 617 548 sind bereits Vorrichtungen zur Längenkorrektur von Seilzügen bekannt mit zwei ineinander steckbaren, relativ zueinander verstellbaren und in unterschiedlichen Positionen miteinander verrastbaren Bauteilen, wobei die jeweilige Raststellung von einem beweglichen Sicherungselement gesichert ist. Die Verrastung der beiden Bauteile erfolgt durch einander zugewandte Zahnungen und Gegenzahnungen an Abschnitten der ineinander gesteckten Bauteile, wobei das Sicherungselement die beiden Bauteile in der jeweiligen Raststellung hält. Zusätzlich ist eine Feder vorgesehen, welche die beiden Bauteile auseinander zu drücken trachtet, um eine automatische Längenkorrektur zu ermöglichen. Als nachteilig bei diesen bekannten Längeneinstellvorrichtungen hat sich insbesondere die Handhabung des Sicherungselementes bei der Ersteinstellung erwiesen.

Aus der DE-C-671 006 ist ebenfalls eine Längenkorrekturvorrichtung bekannt, die mit zwei Ratschenverbindungen in Art einer Freilaufeinrichtung eine automatische Längenänderung eines Bremsgestänges bewirkt. Die Verlängerung des Bremsgestänges bei Verschleiß der Bremsbeläge erfolgt bei Betätigung der Bremse, nötigenfalls durch mehrfaches Betätigen der Bremse. Die erste Betätigung der Bremse kann aber ohne den erwünschten Bremseffekt enden. Zudem bedarf diese Vorrichtung zu ihrer Funktion eines festen Widerlagers, das unmittelbar die Vorrichtung abstützt.

Der Erfindung liegt die Aufgabe zugrunde, eine konstruktiv einfache und in der Funktion zuverlässige Längenkorrekturvorrichtung zu schaffen, welche eine Ersteinstellung des Seilzuges bzw. der Fernbetätigung ermöglicht. Ein weiteres Ziel der Erfindung ist es eine Längenkorrekturvorrichtung für einen selbsttätigen Seillängenausgleich anzugeben.

Gelöst wird diese Aufgabe durch die Merkmale des Anspruchs 1. Gemäß der Erfindung wird das Sicherungselement zur richtigen Einstellung der Längenkorrekturvorrichtung aus der Sicherungsstellung geschoben, danach werden die beiden kraftübertragenden Bauteile im Sinne einer Längung des auf Druck beanspruchten Schlauches auseinander gezogen, wobei schließlich das Sicherungselement in der gewünschten Position der Verrastung zur Verriegelung durch Federbelastung selbsttätig wieder aufgeschoben wird. Dieses Verfahren kann zur Nachstellung bei Verschleiß beliebig oft wiederholt werden und gewährleistet, daß eine Längenkorrektur bereits beim erstmaligen Betätigen, bspw. einer Handbremse, greift. Auch ist eine Nachrüstung mit der erfindungsgemäßen Längenkorrekturvorrichtung in den meisten Fällen möglich. Eine besondere Befestigung der Längenkorrekturvorrichtung ist nicht notwendig, kann jedoch auf Wunsch durch Ausbildung von Laschen oder Ösen an der Vorrichtung vorgesehen sein.

Die Federbelastung kann in einfachster Weise durch eine Schraubenfeder erfolgen. Gleichermaßen kann ein Schnappverschluß mit flexiblen Haken in entsprechende Vertiefungen eingreifen. Jede Form der Fixierung des Sicherungselements in der vorgesehenen Sicherungsposition, dessen Funktion mit der Flexibilität von Material arbeitet, ist hier erfaßt.

Eine vorteilhafte Ausgestaltung der Erfindung ist darin zu sehen, daß das Sicherungselement in der Raststellung der Bauteile verrastet und/oder verriegelt ist. Damit wird sichergestellt, daß ein unbeabsichtigtes Verrutschen des Sicherungselementes und damit eine ungewollte Freigabe der verrasteten Bauteile ausgeschlossen ist.
Eine Fortführung des erfinderischen Gedankens ist darin zu sehen, daß beide Bauteile sägezahnförmig profilierte Längsabschnitte aufweisen, wobei die sägezahnförmig profilierten Längsabschnitte auf einander zugewandten Seiten der Bauteile ausgebildet sind. Die profilierten Längsabschnitte sind am Umfang vorgesehen. Sie weisen eine Vielzahl von Zähnen auf, damit eine möglichst feinfühlige Anpassung an die zu fordernde Länge erfolgen kann.

Für eine automatische Anpassung an die gewünschte Länge ist mit einem weiterführenden Merkmal der Erfindung vorgesehen, daß beide Bauteile eine sie im bestimmungsgemäßen Gebrauchszustand auseinander drückende Feder aufweisen, wobei die Kraft der Feder größer ist, als der Verrastungswiderstand der Bauteile. Die Feder soll weiterhin so ausgelegt sein, daß sie bei dem vorgesehenen Verwendungszweck gleichzeitig die gewünschte Vorspannung der zu verbindenden Teile aufbringt. Damit ist die Frage der Kraft, mit der eine Verbindung von vorzugsweise bewegten Teilen vorgespannt werden soll, aus dem Ermessen des Monteurs genommen und in engen Grenzen zuverlässig vorhersehbar.

Eine besonders vorteilhafte Ausgestaltung der Erfindung ist darin zu sehen, daß eines der zu verrastenden Bauteile mehrere Arme aufweist, an deren Enden Verrastelemente mit einer Rastverzahnung ausgebildet sind und die rückseitig von dem Sicherungselement abgestützt werden. Die Arme erstrecken sich in Längsrichtung. Die an einem Bauteil angeordneten Verrastelemente sollen so angeordnet sein, daß sie in der gleichen Querebene um das zu verrastende Bauteil herum angeordnet sind. Bei hülsenförmig ausgebildeten zu verrastenden Bauteilen bietet sich damit die Möglichkeit, ein Längsende der Hülse in axialer Richtung mehrfach zu schlitzen und die Verrastelemente an den Enden der sich als Arme darstellenden Längsstreifen auszubilden.
Nach einer Weiterbildung der Erfindung weisen die Verrastelemente auf ihrer Rückseite eine Schräge auf, der am Sicherungselement eine komplementäre Schräge zugeordnet ist. Diese Weiterbildung der Erfindung hat vorzugsweise zwei Federn, wovon die erste die verrasteten Bauteile im Sinne einer Verlängerung der Längenkorrekturvorrichtung auseinanderdrückt und das Sicherungselement auf den verrasteten Bauteilen zur Anlage bringt, während die zweite Feder einen Überlastschutz bewirkt bzw. ein ungewolltes Nachstellen verhindert. Für dieses Zusammenwirken der Elemente der Längenkorrekturvorrichtung ist die die Bauteile auseinander drückende Feder schwächer ausgebildet als die für die Überlastsicherung verwendete Feder. Die so ausgebildete Längenkorrekturvorrichtung sorgt ständig für ein vorwählbares Maß an Vorspannung, z.B. in einer mechanisch-flexiblen Fernbetätigung. Tritt materialbedingt eine Längung des Seiles oder eine Stauchung des Schlauches ein, fällt diese Vorspannung weg und die die Bauteile auseinander drückende Feder bringt die zu verrastenden Bauteile in Rastposition, bis die vorhandene Lose in der Fernbetätigung aufgehoben ist.

Die Schräge auf der Rückseite der Verrastelemente ist länger als die Zähne zur Verrastung der auf Druck beanspruchten Bauteile. Die Verrastelemente rutschen beim Auseinanderdrücken mit ihren Rastnasen in die nächste Rastposition, ohne daß die beiden Schrägen außer Kontakt geraten. Die so weitergebildete Längenkorrekturvorrichtung stellt eine automatische Nachstellung der Fernbetätigung und deren konstante Vorspannung sicher, ohne daß es dazu eines Eingreifens von außen bedarf.

Um ein ungewolltes Herausrutschen der Verrastelemente aus der Position zwischen der komplementären Schräge am Sicherungselement und der Schräge der Verzahnung zu vermeiden, ist in einer bevorzugten Ausgestaltung der Erfindung vorgesehen, daß ein aus der Schräge und dem Verzahnungswinkel gebildeter Hinterschnitt an den Verrastelementen gebildet ist.

Die Erfindung bietet in einer weiteren Fortführung ihres Grundgedankens in einfacher Weise auch eine Möglichkeit, eine Überlastung z.B. einer Fernbetätigung zu vermeiden, indem sie eine Federwegreserve zwischen den Bauteilen vorsieht. Die Federwegreserve kann beim Einsatz der Längenkorrekturvorrichtung in einem Kupplungszug in einem Kraftfahrzeug als Kupplungsspiel genutzt werden oder eine Überlastsicherung darstellen, je nach dem, wie die Feder, die die gegeneinander verschieblichen Bauteile vorspannt, ausgelegt ist. Eine solche Überlastsicherung ist insbesondere bei Seilzug-Fensterhebern oder etwa Handbremszügen von besonderem Vorteil. Insoweit sind nach der Erfindung mindestens drei kraftübertragende Bauteile vorgesehen, wobei die Verrastung zwischen zwei Bauteilen erfolgt und die Federwegreserve gegenüber dem dritten Bauteil durch eine Feder aufgebaut wird. Das dritte Bauteil ist an einem der miteinander verrasteten Bauteile zwischen zwei Anschlägen geführt und wird von der Feder gegen einen der Anschläge gedrückt. Auch diese Feder ist für eine Längung der Längenkorrekturvorrichtung ausgelegt.

Schließlich kann die erfindungsgemäße Vorrichtung dadurch vereinfacht werden, daß die Feder zum Aufbau der Federwegreserve das eine Bauteil in seine Sicherungsstellung drückt.

Die Erfindung wird nachfolgend anhand der Zeichnungen näher erläutert.

Es zeigen:
- Figur 1: eine Längenkorrekturvorrichtung in Seitenansicht, teilweise im Schnitt, mit schematisch angedeuteter Kupplung mit Kupplungspedal,
- Figur 2: eine alternative Ausführungsform in einer Darstellung wie Figur 1,
- Figur 3: eine Ausführungsform der Erfindung im Längsschnitt,
- Figur 4: eine andere Ausführungsform nach der Erfindung im Längsschnitt und
- Figur 5: einen vergrößerten Ausschnitt aus Figur 4.

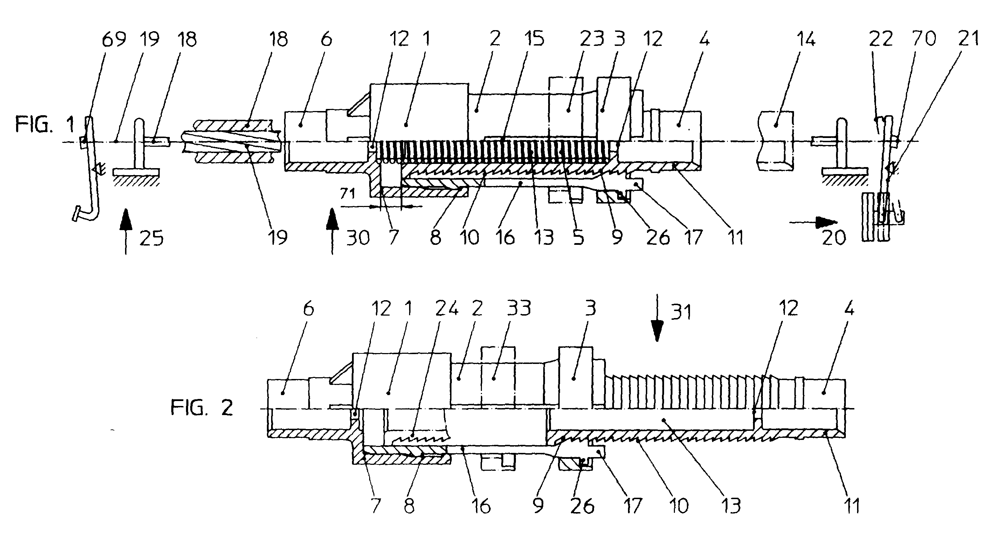

Die Vorrichtungen nach den Figuren 1 und 2 entsprechen nicht der Erfindung nach Anspruch 1.

In Fig. 1 ist eine Längenkorrekturvorrichtung 30 in Anordnung an einem Kupplungszug eines Kraftfahrzeuges zwischen einem Kupplungspedal 25 und einer Kupplung 20 gezeigt. In die Längenkorrekturvorrichtung 30 kann von beiden Längsseiten eine mechanisch-flexible Fernbetätigung mit einem Schlauch 18 und einem darin hin- und herbeweglichen Drahtseil 19 in Schlauchfassungen 6 und 11 eingeführt werden. Eine Durchgangsbohrung 12 erlaubt die ungehinderte Durchführung des Drahtseils 19. Ein nach Art eines Rastbolzens ausgebildetes, hülsenförmiges Bauteil 4 ist mit einem in der Form einer Spannpatrone ausgebildeten Bauteil 2 verrastet. Zur Verrastung weist das hülsenförmige Bauteil 4 eine Außenverzahnung 10 auf, die mit einer Innenverzahnung 9 an Verrastelementen 17, die an den freien Enden von Armen 16 des Bauteils 2 ausgebildet sind, kämmt. Die Arme 16 sind biegeelastisch ausgebildet und können ohne Abstützung durch ein als Sicherungsring ausgebildetes Sicherungselement 3 bei axialer Belastung der Vorrichtung 30 nach außen wegfedern und dem Bauteil 4 eine axiale Verschiebung gestatten.

Das als Spannpatrone ausgebildete Bauteil 2 hat eine Hülsenform und ist durch mehrere an seinem Umfang verteilte Längsschlitze 15 auf einem Längsabschnitt in mehrere Arme 16 unterteilt. Es ist mit einer Verschlußkappe 1 durch eine Schnappverbindung 8 verriegelt. Die Verschlußkappe 1 ist auf dem Bauteil 2 in axialer Richtung mit Spiel 71 geführt, so daß eine geringfügige axiale Verschiebung von wenigen Millimetern zwischen der Verschlußkappe 1 und dem Bauteil 2 möglich ist. Das außen auf der Längenkorrekturvorrichtung 30 verschiebbare Sicherungselement 3 ist zwischen der in vollen Linien gezeichneten Position und der gestrichelt gezeichneten Position 23 von Hand hin- und herbewegbar. Zur Verriegelung der gesamten Vorrichtung wird es gegen einen als Ringbund ausgebildeten Anschlag 26 geschoben und dort klemmend arretiert.

Die Bauteile 2 und 4 und die Verschlußkappe 1 werden von einer auf Druck vorgespannten, zentralen Feder 5 i. w. spielfrei auseinander gedrückt.

Fig. 1 zeigt die Kupplungsbetätigung in ausgezogenen Linien bei nicht betätigtem Kupplungspedal 25 im vormontierten Zustand. Dabei ist ein Kupplungsausrückhebel 21 der Kupplung 20 in seiner hintersten Stellung. Die Kupplung 20 greift in dieser Position des Ausrückhebels 21.

Zur Montage des Kupplungsbetätigungszuges wird die Längenkorrekturvorrichtung 30 in der gezeigten Anordnung eingebaut. Der Schlauch 18 mit der Längenkorrekturvorrichtung 30 hat seine kürzeste Länge. Die Enden 69, 70 des Drahtseiles 19 können in der gezeigten Anordnung leicht von Hand am Kupplungspedal 25 und am Kupplungsausrückhebel 21 eingehängt werden. Bei eingehängtem Drahtseil 19 wird das Sicherungselement 3 in seine Position 23 gebracht. Die Druckfeder 5 kann in dieser Position des Sicherungselementes 3 die Arme 16 spreizen, und das Bauteil 4 verschiebt sich unter der Wirkung der Feder 5 in seine Position 14, in der alle Lose aus dem Betätigungszug der Kupplung 20 herausgedrückt ist. Mit der so automatisch sich einstellenden Vorspannung des gesamten Kupplungszuges durch die einzige Feder 5 wird das Sicherungselement 3 wieder von Hand in seine in vollen Linien gezeichnete Verriegelungsstellung geschoben. Der Betätigungszug für die Kupplung 20 ist dann fertig installiert.

Die zentrale Feder 5 erlaubt auch ein geringfügiges Zusammendrücken der Längenkorrekturvorrichtung 30 um das mit Bezugszeichen 71 angedeutete Maß. Die Feder 5 kann so ausgelegt werden, daß die Federwegreserve 71 als Kupplungsspiel oder als Überlastsicherung dient.

Die Teile der in Fig. 2 gezeigten Längenkorrekturvorrichtung 31 sind im wesentlichen baugleich mit denen aus Fig. 1, nur das Montageverfahren geht einen anderen Weg und die Vorrichtung 31 hat keine Feder zur Spreizung. Schließlich hat die Ausführungsform nach Fig. 2 keine Federwegreserve. Die Bauteile 2 und 4 sowie das Sicherungselement 3 und die Schlauchfassungen 6 und 11 sind baugleich mit Fig. 1. Die Unterschiede zwischen den Ausführungsformen in Fig. 1 und Fig. 2 betreffen auch nicht die zentrale Durchgangsbohrung 12, die dem Drahtseil 19 die Durchführung durch die Vorrichtung 31 erlauben.

In einer Anordnung wie in Fig. 1, zwischen einem Kupplungspedal 25 eines Kraftfahrzeuges und einer Kupplung 20, wird die Längenkorrekturvorrichtung 31 mit herausgezogenem Bauteil 4 vormontiert in die Kupplungsanlage eingesetzt. Zum Einhängen der Seilenden 69, 70 muß der Kupplungsausrückhebel 21 in die bei 22 gestrichelt gezeichnete Position vorbewegt werden. Jetzt können auch bei herausgezogenem Bauteil 4 ohne Probleme die Enden 69, 70 eingehängt werden. Die Position 22 gibt die Stellung des Ausrückhebels 21 wieder, in der sich dieser in der vorbestimmten Ausrückstellung der Kupplung 20 befinden muß. Zum Einstellen der Kupplung wird das Kupplungspedal 25 betätigt. Dabei schiebt sich das Bauteil 4 nach Fig. 2 bei in Position 33 gebrachtem Sicherungselement 3 soweit in das hülsenförmige Bauteil 2 ein, bis die Position 24 erreicht ist. Jetzt entspricht die Stellung des Kupplungspedals 25 und die des Ausrückhebels 21 der Situation einer getrennten Kupplung. Das Sicherungselement 3 wird auf den Sitz der Verzahnungen 9 und 10 im Bereich der Verrastelemente 17 aufgeschoben und das Kupplungspedal 25 wird losgelassen. Ausgehend von einer entsprechenden Auslegung der Kupplungsanlage greift nun die Kupplung bei losgelassenem Kupplungspedal 25.

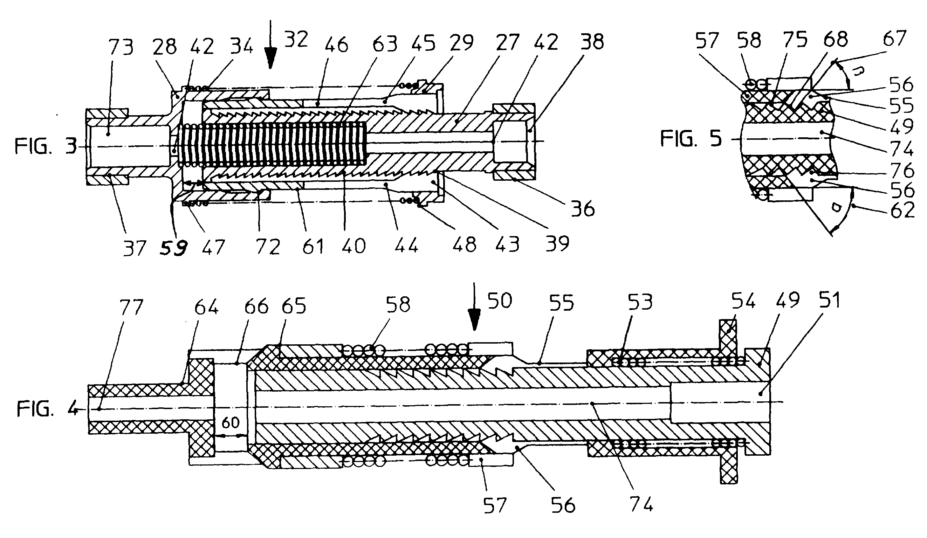

Die in Fig. 3 gezeigte Ausführungsform der Längenkorrekturvorrichtung 32 weist ähnlich Fig. 1 und Fig. 2 zwei ineinander gesteckte hülsenförmige Bauteile 27, 61 auf, die mit Verzahnungen 39 und 40 miteinander verrastet sind. An den Längsenden können in Schlauchfassungen 38 und 73 die Enden von Fernbetätigungszügen eingesteckt werden, die mit Quetschringen 36, 37 arretiert werden. Das Bauteil 27 hat eine Durchgangsbohrung 42, die sich in einem kappenförmig ausgebildeten Verschlußdeckel 28 am Längsende des Bauteils 61 fortsetzt. Das Bauteil 61 ist ähnlich dem Bauteil 2 nach Art einer Spannpatrone ausgebildet mit einem mit Schlitzen 46 versehenen Längsende. Federarme 44, 45, an deren Enden die Verrastelemente 43 ausgebildet sind, werden von den Längsschlitzen 46 getrennt. Die Verrastelemente 43 sind sämtlich in der gleichen Querebene der Längenkorrekturvorrichtung 32 angeordnet. Sie tragen an ihrer Innenseite die Verzahnung 39, die komplementär zu der Verzahnung 40 an der Außenseite des Bauteils 27 ausgebildet ist.

Ein Sicherungselement 29 ist außen auf dem Bauteil 61 verschiebbar angeordnet und wird von einer Feder 34 in seine Verriegelungsstellung über das Verrastelement 43 gedrückt. Die Feder 34 stützt sich an einem Ringbund 47 außen am Verschlußdeckel 28 und an einer Schulter 48 des Sicherungselementes 29 ab. Der Verschlußdeckel 28 ist mit dem Bauteil 61 durch einen Schnappverschluß 72 verbunden, der eine wenige Millimeter betragende Verschiebemöglichkeit zwischen dem Deckel 28 und dem Bauteil 61 zuläßt, die als Federwegreserve 59 dient. Diese kann, wie bereits in Fig. 1 gezeigt, als Überlastsicherung oder als Kupplungsspiel dienen. Die gesamte Längenkorrekturvorrichtung wird von einer Druckfeder 63 innerhalb des Bauteils 27 axial vorgespannt, wie dies bereits im Zusammenhang mit Fig. 1 beschrieben wurde. Dabei werden der Verschlußdeckel 28 und das Bauteil 61 von der zentralen Feder 63 soweit auseinander gedrückt, daß sich die Federwegreserve 59 einstellt.

Der Unterschied zu Fig. 1 ist im wesentlichen darin zu sehen, daß die Verriegelung der verrasteten Bauteile 27, 61 durch das federbelastete Sicherungselement 29 automatisch erfolgt und keine weiteren Maßnahmen zur Sicherung des Sicherungselementes 29 in seiner Verriegelungsposition erforderlich sind.

Die in Fig. 4 gezeigte Ausführungsform einer Längenkorrekturvorrichtung 50 mit der in Fig. 5 dargestellten ausschnittsweisen Vergrößerung zeichnet sich dadurch aus, daß sie automatisch eine Nachstellung der Länge der Vorrichtung durchführt, sobald das erforderliche Maß an Vorspannung, z.B. des Schlauches einer mechanisch-flexiblen Fernbetätigung, nicht mehr gegeben ist. Die Längenkorrekturvorrichtung 50 weist ein hülsenförmiges und mit einer Außenverzahnung 75 versehenes Bauteil 49 auf mit einer Schlauchfassung 51 und einer zentralen Durchgangsbohrung 74. Mit dem Bauteil 49 ist ein weiteres, über das Bauteil 49 geschobenes und daran geführtes Bauteil 54 verrastet. Beide Bauteile 49, 54 sind durch eine auf Druck vorgespannte Feder 53 gegeneinander verspannt. Stirnseitig sind an dem Bauteil 54 sich in axialer Richtung erstreckende, federnde Arme 55 mit Verrastelementen 56 vorgesehen, die mit einer Innenverzahnung 76 in die Außenverzahnung 75 am Bauteil 49 eingreifen. Das Sicherungselement 57 hat stirnseitig eine Schräge 62, der eine komplementäre Schräge an dem Verrastelement 56 zugeordnet ist. Mit seiner vorderen Spitze bildet das Verrastelement 56 einen Hinterschnitt 68, der in die Verzahnung 75 eingreift. Dieser Hinterschnitt 68 wird durch die unterschiedliche Neigung a der Schräge 62 und der Schräge der Innenverzahnung unter dem Winkel β gebildet. Dadurch wird ein unbeabsichtigtes Herausrutschen des Verrastelementes 56 aus dem Zwischenraum zwischen der Verzahnung 75 und dem Sicherungselement 57 verhindert.

Die Verrastung der Bauteile 49 und 54 wird durch das Sicherungselement 57 gesichert. Das Sicherungselement 57 hat eine Hülsenform und ist in axialer Richtung am Bauteil 49 geführt. Das in Art einer Schlauchfassung ausgebildete Bauteil 64 wird durch die Feder 58 gegen die als Widerlager ausgeführten Haken 65 des Sicherungselementes 57 gedrückt, wobei die Haken 65 in Schlitze 66 des Bauteils 64 eingreifen. An dem Bauteil 64 ist am äußeren Längsende der Vorrichtung 50 eine Schlauchfassung 77 ausgebildet. Eine Federwegreserve 60 wird durch die als Anschlag ausgebildeten Haken 65 am Sicherungselement 57 und die Stirnseite des Bauteils 64 begrenzt.

Die gesamte Vorrichtung 50 wird von den zu verbindenden Teilen, also z.B. Kupplungspedal und Kupplung wie in Fig. 1, oder den Seilenden eines Seilzug-Fensterhebers, auf Druck vorgespannt.

Sowohl bei der Ersteinstellung als auch im Nachstellfalle drückt eine zwischen den Bauteilen 49 und 54 angeordnete Druckfeder 53 dieselben soweit auseinander, bis die gesamte Vorrichtung 50 an beiden Enden auf Widerstand stößt. Ohne diesen äußeren Widerstand kann das Sicherungselement 57 die Bauteile 49 und 54 nicht verriegeln und das Bauteil 49 rutscht unter den zurückweichenden Verrastelementen 56 in der Zeichnung nach Fig. 4 und Fig. 5 nach rechts. Sobald das Bauteil 64 auf Widerstand stößt, schiebt es das Sicherungselement 57 auf die Rückseite der Verrastelemente 56, die dadurch mit dem Bauteil 49 verriegelt werden.

Die Feder 58 stützt sich einerseits am Schieber 64 und andererseits am Sicherungselement 57 ab und spannt beide gegeneinander vor. Mit dieser Vorspannung wird auch eine Federwegreserve 60 eingestellt, die wie schon die anderen Federwegreserven 59 und 71 verschiedene Funktionen haben kann. Der die Federwegreserve kennzeichnende Kraftverlauf läßt sich unabhängig von der Federkennlinie der Feder 53 gestalten, sofern nur die Feder 58 stärker als die Feder 53 ausgelegt ist.

## Patentansprüche

1. Vorrichtung zur Längenkorrektur von Seilzügen, mechanisch-flexiblen Fernbetätigungen o. dgl. mit zwei relativ zueinander verstellbaren, in unterschiedlichen Positionen miteinander verrastbaren und in der jeweiligen Rastposition von einem beweglichen Sicherungselement (29; 57) gesicherten Bauteilen (27, 61; 49, 54), dadurch gekennzeichnet, daß das Sicherungselement (29; 57) federbelastet in seine Sicherungsstellung gedrückt ist.

2. Vorrichtung nach Anspruch 1, dadurch gekennzeichnet, daß das Sicherungselement (29; 57) von einer Feder (34; 58) in die Sicherungsstellung gedrückt ist.

3. Vorrichtung nach Anspruch 1 oder 2, dadurch gekennzeichnet, daß das Sicherungselement (29; 57) in der Raststellung der Bauteile (27, 61; 49, 54) verrastet und/oder verriegelt ist.

4. Vorrichtung nach einem oder mehreren der vorangegangenen Ansprüche, dadurch gekennzeichnet, daß beide Bauteile (27, 61; 49, 54) sägezahnförmig profilierte Längsabschnitte aufweisen, wobei die sägezahnförmig profilierten Längsabschnitte (40, 39; 75, 76) auf einander zugewandten Seiten der Bauteile (27, 61; 49, 54) ausgebildet sind.

5. Vorrichtung nach einem oder mehreren der vorangegangenen Ansprüche, dadurch gekennzeichnet, daß beide Bauteile (27, 61; 49, 54) eine sie im bestimmungsgemäßen Gebrauchszustand auseinander drückende Feder (63; 53) aufweisen, wobei die Kraft der Feder (63; 53) größer ist als der Verrastungswiderstand der Bauteile (27, 61; 49, 54).

6. Vorrichtung nach einem oder mehreren der vorangegangenen Ansprüche, dadurch gekennzeichnet, daß eines der zu verrastenden Bauteile (61; 54) mehrere Arme (45; 55) aufweist, an deren Enden Verrastelemente (43; 56) mit einer Rastverzahnung (39; 76) ausgebildet sind und die rückseitig von dem Sicherungselement (29; 57) abgestützt sind.

7. Vorrichtung nach Anspruch 6, dadurch gekennzeichnet, daß die Verrastelemente (56) auf ihrer Rückseite eine Schräge aufweisen, der am Sicherungselement (57) eine komplementäre Schräge (62) zugeordnet ist.

8. Vorrichtung nach Anspruch 7, dadurch gekennzeichnet, daß ein aus der Schräge (62) und dem Verzahnungswinkel (β) gebildeter Hinterschnitt (68) an dem Verrastelement (56) gebildet ist.

9. Vorrichtung zur Längenkorrektur von Seilzügen, mechanisch-flexiblen Fernbetätigungen o. dgl. mit zwei relativ zueinander verstellbaren, in unterschiedlichen Positionen miteinander verrastbaren und in der jeweiligen Rastposition von einem beweglichen Sicherungselement (29; 57) gesicherten Bauteilen (27, 61; 49, 54), nach einem oder mehreren der Ansprüche 1 bis 8, dadurch gekennzeichnet, daß sie mindestens drei kraftübertragende Bauteile (27, 61, 28; 49, 54, 64) aufweist wobei die Verrastung zwischen zweier dieser Bauteile (61, 27; 49, 54) erfolgt und eine Federwegreserve (59; 60) gegenüber dem dritten Bauteil (28; 64) durch eine Feder (63, 34; 58) aufgebaut ist.

10. Vorrichtung nach Anspruch 9, dadurch gekennzeichnet, daß die Feder (58) zum Aufbau der Federwegreserve (60) das Sicherungselement (57) in seine Sicherungsstellung drückt.

## Claims

1. Device for the length correction of cable pulls, mechanically flexible remote controls or the like with two components (27, 61; 49, 54), which are each displaceable relative to the other, each detentable with the other in different positions and secured in the respective detent position by a movable securing element (29; 57), characterised thereby, that the securing element (29; 57) is urged into its securing position by spring-loading.

2. Device according to claim 1, characterised thereby, that the securing element (29; 57) is urged into its securing position by a spring (34; 58).

3. Device according to claim 1 or 2, characterised thereby, that the securing element (29; 57) is detented and/or latched in the detent position of the components (27, 61; 49, 54).

4. Device according to one or more of the preceding claims, characterised thereby, that both components (27, 61; 49, 54) comprise longitudinal portions profiled in sawtooth shape, wherein the longitudinal portions (40, 39; 75, 76), which are profiled in sawtooth shape, are arranged on mutually facing sides of the components (27, 61; 49, 54).

5. Device according to one or more of the preceding claims, characterised thereby, that both components (27, 61; 49, 54) comprise a spring (63; 53) urging them apart in the state of use as intended, wherein the froce of the spring (63; 53) is greater than the detent resistance of the components (27, 61; 49, 54).

6. Device according to one or more of the preceding claims, characterised thereby, that one of the components (61; 54) to be detented comprises several arms (45; 55), at the ends of which detent elements (43; 56) with a detent toothing (39; 76) are formed and which are supported at the rear side by the securing element (29; 57).

7. Device according to claim 6, characterised thereby, that the detent elements (56) on the rear side display a bevel, with which a complementary bevel (62) at the securing element (57) is associated.

8. Device according to claim 7, characterised thereby, that an undercut (68) formed of the bevel (62) and the toothing angle (β) is formed at the detent element (56).

9. Device for the length correction of cable pulls, mechanically flexible remote controls or the like with two components (27, 61; 49, 54), which are each displaceable relative to the other, each detentable with the other in different positions and secured in the respective detent position by a movable securing element (29; 57) according to one or more of the claims 1 to 8, characterised thereby, that it comprises at least three force-transmitting components (27, 61, 28; 49, 54, 64), wherein the detent takes place between two of these components (27, 61; 49, 54) and a spring travel reserve (59; 60) relative to the third component (28; 64) is built up by a spring (63, 34; 58).

10. Device according to claim 9, characterised thereby, that the spring (58) for the build-up of the spring travel reserve (60) urges the securing element (57) into its securing position.

## Revendications

1. Dispositif de correction de longueur pour commandes par câble, commandes à distance mécaniques flexibles, ou similaires, comprenant deux composants (27, 61; 49, 54) pouvant être déplacés l'un par rapport à l'autre, verrouillables ensemble dans différentes positions, et pouvant être bloqués dans les positions respectives d'enclenchement au moyen d'un élément de blocage mobile (29; 57),
caractérisé en ce que l'élément de blocage (29, 57) est précontraint élastiquement de manière à être rappelé dans sa position de verrouillage.

2. Dispositif selon la revendication 1, caractérisé en ce que l'élément de blocage (29; 57) est rappelé dans la position de verrouillage par un ressort (34; 58).

3. Dispositif selon la revendication 1 ou 2, caractérisé en ce que l'élément de blocage (29; 57) est enclenché et/ou verrouillé lorsque les composants (27, 41; 49, 54) se trouvent dans leur position d'enclenchement.

4. Dispositif selon l'une des revendications précédentes, caractérisé en ce que les deux composants (27, 61; 49, 54) comportent des sections longitudinales profilées en forme de dents de scie, les sections longitudinales (40, 39; 75, 76) profilées en forme de dents de scie étant conformées sur les côtés respectivement juxtaposés des composants (27, 61; 49, 54).

5. Dispositif selon l'une ou plusieurs des revendications précédentes, caractérisé en ce que les deux composants (27, 61 ; 49, 54) comportent un ressort (63 ; 53), qui les écarte l'un de l'autre dans la situation d'utilisation de ceux-ci, à laquelle ils sont destinés, la force du ressort (63 ; 53) étant supérieure à la résistance d'enclenchement des composants (27, 61 ; 49, 54).

6. Dispositif selon l'une ou plusieurs des revendications précédentes, caractérisé en ce que l'un des composants (61 ; 54) à encliqueter l'un dans l'autre comporte plusieurs bras (45 ; 55), à l'extrémité desquels des éléments à crans d'arrêt (43 ; 56) sont conformés, qui comportent une denture de crans d'arrêt (39 ; 76) et qui sont maintenus, par leur face dorsale, par l'élément de blocage (29 ; 57).

7. Dispositif selon la revendication 6, caractérisé en ce que les éléments à crans d'arrêt (56) comportent, au niveau de leur face dorsale, un chanfrein, auquel est associé un chanfrein complémentaire (62) ménagé sur l'élément de blocage (57).

8. Dispositif selon la revendication 7, caractérisé en ce qu'un décrochement (68) est formé sur l'élément à crans d'arrêt (56), qui est défini par le chanfrein (62) et l'angle (β) de la denture.

9. Dispositif de correction de longueur pour commandes par câble, commandes à distance mécaniaues flexibles, ou similaires, comprenant deux composants (27, 61 ; 49, 54) pouvant être déplacés l'un par rapport à l'autre, verrouillables ensemble dans différentes positions, et pouvant être bloqués dans les positions respectives d'enclenchement au moyen d'un élément de blocage mobile (29 ; 57), selon l'une ou plusieurs des revendications 1 à 8, caractérisé en ce que le dispositif comporte au moins trois composants (27, 61, 28 ; 49, 54, 64) de transmission de forces, l'enclenchement intervenant entre deux de ces composants (61, 27 ; 49, 54), et une réserve de débattement (59 ; 60) étant établie par rapport au troisième composant (28; 64), grâce à un ressort (63, 34 ; 58).

10. Dispositif selon la revendication 9, caractérisé en ce que le ressort (58) destiné à établir la réserve de débattement (60) repousse l'élément de blocage (57) dans sa position de verrouillage.
